Europäisches Patentamt

European Patent Office

Office européen des brevets

(19)

(11) Veröffentlichungsnummer: **0 072 544**
**B1**

(12)

# EUROPÄISCHE PATENTSCHRIFT

(45) Veröffentlichungstag der Patentschrift:
**15.01.86**

(51) Int. Cl.⁴: **C 08 F 14/06**, C 08 F 2/18

(21) Anmeldenummer: **82107358.2**

(22) Anmeldetag: 13.08.82

(54) **Kontinuierliches Verfahren zur Herstellung von Vinylchloridpolymerisaten in wässriger Suspension.**

(30) Priorität: 17.08.81 DE 3132421

(43) Veröffentlichungstag der Anmeldung:
**23.02.83 Patentblatt 83/8**

(45) Bekanntmachung des Hinweises auf die Patenterteilung:
**15.01.86 Patentblatt 86/3**

(84) Benannte Vertragsstaaten:
**BE DE FR GB IT NL**

(56) Entgegenhaltungen:
**EP-A-0 045 931**
**BE-A-678 172**

(73) Patentinhaber: **HOECHST AKTIENGESELLSCHAFT,
Postfach 80 03 20, D-6230 Frankfurt am Main 80
(DE)**

(72) Erfinder: **Engelmann, Manfred, Dr., Baader
Strasse 2a, D-8263 Burghausen/Salzach (DE)**
Erfinder: **Klippert, Heinz, Dr., Hochfellnstrasse 14,
D-8261 Burgkirchen/Alz (DE)**
Erfinder: **Tzschoppe, Eberhard, Hochfellnstrasse 9,
D-8261 Burgkirchen/Alz (DE)**

EP 0 072 544 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein kontinuierliches Verfahren zur Herstellung von Vinylchloridpolymerisaten in wäßriger Suspension gemäß Patentanspruch 1.

Vinylchlorid wird bereits seit vielen Jahren in großtechnischem Maßstab in wäßriger Dispersion polymerisiert. Während die polymerisation in wäßriger Emulsion in Gegenwart von wasserlöslichen Emulgatoren und Aktivatoren schon von Anbeginn der technischen Entwicklung kontinuierlich durchgeführt wurde und auch heute noch dieses Verfahren weitgehend in der Technik Anwendung findet, wurde für die Polymerisation von Vinylchlorid in wäßriger Suspension in Gegenwart wasserlöslicher Suspendiermittel (Schutzkolloide) sowie öllöslicher Aktivatoren bisher das diskontinuierliche (absatzweise) Polymerisationsverfahren bevorzugt. Durch die laufende Absatzsteigerung des Massenkunststoffs polyvinylchlorid und durch die Konkurrenz mit anderen Massenkunststoffen besteht schon seit Jahren die Notwendigkeit, immer billiger produzieren zu müssen und die Möglichkeit, in immer größeren Mengen produzieren zu können. Bei einer derartigen Entwicklung hat die Herstellung von polyvinylchlorid in wäßriger Suspension nach einem kontinuierlichen Verfahren Vorteile, da ein solches Verfahren in der Regel bessere Raum-Zeit-Ausbeuten ermöglicht als ein diskontinuierliches und der Nachteil eines kontinuierlichen Verfahrens, bei Typumstellungen relativ träge zu sein, angesichts der immer größeren Absatzchancen für einen Typ immer weniger ins Gewicht fällt.

Obwohl für die kontinuierliche Emulsionspolymerisation von Vinylchlorid aufgrund der jahrelangen technischen Anwendungen eine ganze Reihe von Verfahren und Verfahrensverbesserungen bekannt sind, lief die technische Entwicklung bei der Suspensionspolymerisation bisher weitgehend in die Richtung, weiterhin absatzweise, jedoch in immer größeren Einheiten zu produzieren. Dies liegt wohl in erster Linie daran, daß die für die kontinuierliche Emulsionspolymerisation bekannten Techniken auf eine entsprechende kontinuierliche Suspensions-Polymerisation nicht ohne weiteres, das heißt, nicht mit den dem Fachmann geläufigen überlegungen zu übertragen sind.

Von den bisherigen Entwicklungen auf dem Gebiet der kontinuierlichen Suspensionspolymerisation von Vinylchlorid ist aus der US-PS 3 007 903 ein Verfahren bekannt, bei dem in einer Vielzahl von hintereinander geschalteten Zonen, vorzugsweise fünf bis zehn, Polymerisiert wird. Diese Zonen werden dargestellt durch eine entsprechende Anzahl von Rührkesseln, wobei das Reaktionsmedium von einem Kessel in den darunter angeordneten nächsten Kessel überfließt. Die Zonen können auch Abteilungen eines Rohrreaktors sein. Um die VerstoPfung der Übergänge von einer Zone in die andere Zone zu vermeiden, wird ein inertes Gas im Gleichstrom mit der Polymerisationsflotte durch die verschiedenen Zonen geführt.

Aus der DE-AS 11 16 410 ist ein kontinuierliches Suspensions-Polymerisationsverfahren für Vinylverbindungen bekannt, wobei die Dispergierung des oder der Monomeren in der wäßrigen Flotte und die anschließende Polymerisation in einer Anzahl übereinander angeordneter, mechanisch durchgerührter Umwandlungszonen durchgeführt wird. Hierzu wird eine Reaktionskammer verwendet, die aus einem vertikal angeordneten Druckgefäß besteht, dessen Durchmesser wesentlich kleiner ist als seine Höhe, in dessen senkrechter Mittellinie eine durchgehende Achse angeordnet ist, die drei oder mehr radial wirkende Flügelräder trägt. Diese Flügelräder sind von oben nach unten in zunehmenden Abständen voneinander angeordnet, damit gerade das geringste Maß an Bewegung erzielt wird, um das Monomere in Tröpfchen der gewünschten Größe zu zerkleinern und eine Suspension aufrechtzuerhalten. An der Innenwand des Reaktionsgefäßes sind zweckmäßig mehrere nach innen gerichtete vertikale Prallplatten oder ähnliche Einrichtungen angebracht, deren Breite entwa 1/10 bis 1/12 des Durchmessers des Reaktionsgefäßes beträgt. Die Prallplatten sind um etwa 90 ° voneinander versetzt und dienen dazu, den Reibungswiderstand der Aufschlämmung im Reaktionsgefäss zu erhöhen.

Weiterhin ist aus DE-AS 12 17 069 eine Vorrichtung zur kontinuierlichen Polymerisation von ethylenisch ungesättigten polymerisierbaren Verbindungen, darunter auch Vinylchlorid, bekannt, die aus einem rotationssymmetrischen Reaktionsraum besteht, der durch rotationssymmetrische Körper in Kammern unterteilt ist, wobei die Kammern miteinander durch kleine Öffnungen verbunden sind und ein Fluß des Reaktionsgutes nur in der Hauptflußrichtung des Polymerisationsgutes möglich ist.

Im einfachsten Fall sind die rotationssymmetrischen Körper Scheiben, die durch schmale Ringspalte von den Wandungen des Reaktionsraumes getrennt sind. Diese Scheiben sind auf einer rotierenden Antriebswelle befestigt, in Abständen, die den jeweiligen Anforderungen entprechend gewählt werden. Eine beigefügte Zeichnung zeigt in Flußrichtung des Polymerisationsgutes zunehmende Scheibenabstände, wobei das Verhältnis der Länge zu Durchmesser der durch die Scheiben abgetrennten Kammern etwa 0,1 bis 0,6 beträgt. In der in Strömungsrichtung letzten Kammer ist ein Blattrührer auf der rotierenden Achse angebracht. Die Vorrichtung ist als besonders geeignet für die Emulsionspolymerisation beschrieben, soll jedoch auch für die Polymerisation in wäßriger Suspension anwendbar sein.

Eine weitere Vorrichtung, insbesondere für die kontinuierliche Suspensionspolymerisation von Vinylchlorid ist bekannt aus DE-AS 23 43 788. Sie besteht aus einem zentralen, rohrförmigen Reaktionsraum und einer Welle, die senkrecht durch diesen Raum geführt ist, wobei der Reaktionsraum durch Trennkörper in Kammern geteilt ist, und die Kammern untereinander durch kleine Öffnungen in den Trennkörpern verbunden sind. Diese Kammern tragen Ringrohrleitungen, von denen jeweils eine durch zwei Öffnungen an eine Kammer angeschlossen ist. In allen Kammern können Rührorgane an der durch sie laufenden Welle angebracht sein. Die Körper, die die Kammern im zentralen Reaktionsraum voneinander abtrennen, sind vorteilhaft an den Wänden dieses Reaktionsraumes befestigt und lassen in der Mitte eine Öffnung frei, durch die die Welle, auf der die Rührorgane befestigt sind, läuft. Zweckmäßig sollen 5 bis 30 Stufen (Kammern plus Ringrohrleitung) angewendet werden. Die beigefügte Zeichnung zeigt eine Vorrichtung mit 9 Kammern, davon 7 mit Ringrohrleitungen. Ein Ausführungsbeispiel beschreibt die polymerisation von Vinylchlorid in einer Apparatur entsprechend der Zeichnung, die keine Rührorgane an der durchgehenden Welle enthält. Die gesamte Vorrichtung wird im allgemeinen aus Edelstahl hergestellt. Dabei wird darauf geachtet, daß möglichst glatte Innenflächen entstehen, um keine Ansatzpunkte für Ablagerungen zu bilden.

Wie aus der erst- und letztgenannten Veröffentlichung hervorgeht, bilden Wandablagerungen ein Problem bei der kontinuierlichen Suspensionspolymerisation von Vinylchlorid. Beim erstgenannten Verfahren wird versucht, wenigstens die verstopfungsempfindlichsten Stellen, die Überleitungsrohre, mittels Durchblasen von Gas freizuhalten. Diese Methode ist nicht geeignet, um auch in den Reaktionsräumen weitgehend ohne Wandbeläge zu fahren und die dadurch bedingten Schwierigkeiten, wie die Verschlechterung des Wärmeübergangs, Verunreinigung des Polymerisates durch Grobpartikel usw. zu vermeiden. Außerdem kann das Durchblasen von Gas bei Polymerisationsansätzen, die infolge ihres vermehrten Gehaltes an oberflächenaktiven Stoffen zum Schäumen neigen, zu erheblichen Schwierigkeiten führen. Beim zweiten und dritten der genannten Verfahren wird auf das Problem der Wandbeläge überhaupt nicht eingegangen, sie treten aber mit Sicherheit in dem mit Prallplatten versehenen Reaktor bzw. in den durch die Scheiben abgeteilten Kammern im Reaktor auf und machen eine umständliche Reinigungsoperation erforderlich. Ähnliches gilt für die ohnehin recht aufwendige Apparatur gemäß der vierten beschriebenen Veröffentlichung. Hier sollen zwar durch glatte Innenflächen Ablagerungen vermieden werden und eine Reinigung des Reaktors angeblich nicht notwendig sein, es wird jedoch anschließend gesagt, daß gelegentlich doch etwas Wandbelag entstehen kann, der dadurch beseitigt wird, daß die ganze Apparatur abgestellt und mit Hilfe eines Lösungsmittels, beispielsweise Tetrahydrofuran, gereinigt werden muß. Bei einer großtechnischen Anlage sind hierzu beträchtliche Mengen Lösungsmittel erforderlich, die gesondert gelagert und wieder aufgearbeitet werden müssen, was neben dem ohnehin beträchtlichen Aufwand für die vergleichsweise komplizierte Polymerisationsapparatur auch noch einen zusätzlichen verfahrenstechnischen Aufwand bedeutet.

Bezüglich der DE-AS 11 16 410 zeigt ein weiter unten aufgeführter Vergleich des dort anhand der Beispiele beschriebenen Polymerisationsverfahrens mitdem Verfahren der vorliegenden Erfindung, daß selbst unter güstigen Umständen nur eine deutlich geringere Raum-Zeit-Ausbeute erzielbar ist. Auf die Belagsbildung wurde bereits weiter oben hingewiesen. Es wurde festgestellt, daß die Belagsbildung bei höheren Schergefällen deutlich zunimmt. Diese treten mit Sicherheit beim Verfahren der DE-AS 11 16 410 auf.

Es wurde auch schon in der EP-A-0045931 ein kontinuierliches Verfahren zur Herstellung eines Vinylchloridpolymerisates in wäßriger Suspension vorgeschlagen, wobei in mindestens zwei Reaktionszonen, in denen die Polymerisationsmischung soweit in Bewegung gehalten wird, daß sich das gebildete Polymere nicht absetzt, gearbeitet wird. In der ersten Reaktionszone wird bis zu einem Umsatz von 3 bis 10 Gew.-%, bezogen auf eingesetzte Monomere, polymerisiert. In allen Reaktionszonen wird eine Pfropfenströmung der Polymerisationsmischung aufrechterhalten, in der ersten Reaktionszone die Polymerisationsmischung in einer für die Einstellung der angestrebten Kornmorphologie ausreichenden Weise bewegt und, insbesondere in der zweiten Reaktionszone, das Entstehen von Polymerbelägen an den Oberflächen, die mit der Polymerisationsmischung in Berührung kommen, verhindert. Dieses Verfahren bietet eine Reihe von Vorteilen gegenüber den vorher genannten, beispielsweise nur noch geringe Belagsbildung und verbesserte Raum-Zeit-Ausbeute. Obwohl das hiermit erzeugte Produkt bereits gute Eigenschaften aufweist, besteht ständig der Wunsch, selbst gute Eigenschaften noch zu verbessern. Die vorliegende Erfindung stellt sich die Aufgabe, die bisher bekannten Verfahren für die kontinuierliche Suspensionspolymerisation von Vinylchlorid und die damit erzeugten Produkte in ihrem Eigenschaftsbild weiter zu verbessern.

Diese Aufgabe wird gelöst durch ein kontinuierliches Verfahren zur Herstellung eines Vinylchloridpolymerisates durch Homo-, Co- oder Pfropfpolymerisation von Vinylchlorid, gegebenenfalls in Gegenwart eines oder mehrerer mit Vinylchlorid copolymerisierbarer Monomerer und/oder eines oder mehrerer mit Vinylchlorid pfropfpolymerisierbarer Polymerer, in wäßriger Suspension, in Gegenwart eines oder mehrerer radikalisch zerfallender Aktivatoren, Suspendiermittel, gegebenenfalls anderer oberflächenaktiver Stoffe und weiterer Zusatzstoffe, in mindestens zwei Zonen, in denen die Polymerisationsmischung soweit in Bewegung gehalten wird, daß sich das gebildete Polymere nicht absetzt, wobei in der ersten Zone bis zu einem Umsatz von höchstens 10 Gew.-% unter Rühren mit einer volumenspezifischen Rührleistung von 0,6 bis 6 kWm⁻³ polymerisiert wird, wobei ferner der Umsatz beim Verlassen der letzten Zone 70 bis 98 % beträgt, anschließend abgekühlt, entspannt, von nichtumgesetztem Monomerem befreit und nach Abtrennung der Hauptmenge der wäßrigen Flotte zu einem trockenen Polymerpulver verarbeitet wird, das dadurch gekennzeichnet ist, daß die Polymerisationsmischung in der ersten Zone bis zum Erreichen eines Vinylchlorid-Monomer-Umsatzes von 0 bis 3 Gew.-% in einer Apparatur bei einer theoretischen Kaskaden-Stufenzahl von 3 bis 20, bei mittleren Verweilzeiten der Polymerisationsmischung von 5 bis 60 min und bei einer Temperatur, die zwischen 15 °C und einer Temperatur die 10 °C unter der Temperatur in der zweiten Zone liegt, sowie in der zweiten Zone in einer Apparatur bei einer theoretitischen Kaskaden-Stufenzahl von 10 bis 100 mit einer volumenspezifischen Rührleistung von 0,01 bis 0,2 kWm⁻³ bewegt und bei Temperaturen von 40 bis 80 °C polymerisiert wird, wobei sich alle Umsatz-Angaben auf eingesetzte(s) Monomere(s) beziehen.

Die Erfindung beruht auf der überraschenden Feststellung, daß bedeutende Verbesserungen erzielt werden, wenn in der Zone, in der im wesentlichen die Dispergierung des oder der Monomeren in der wäßrigen Flotte stattfindet, bestimmte Verfahrensparameter eingehalten werden, die sich deutlich von denen unterscheiden, die in der Zone einzustellen sind, in der der weitaus größte Teil der eigentlichen Polymerisation stattfindet.

Die beiden Zonen können in einem gemeinsamen Gefäß liegen, in dem sie zweckmäßig durch eine Trennwand voneinander abgeteilt sind, die eine im Vergleich zum gesamten Behälterquerschnitt enge Durchlaßöffnung aufweist. Vorteilhaft liegen die zwei Zonen jedoch in voneinander getrennten Behältern, die jeweils mit "Apparatur" bezeichnet sind, wobei jede Apparatur für sich wiederum aus einem oder mehreren Behältern bestehen kann. Die für die erste Zone verwendete Apparatur besteht bevorzugt aus einem oder zwei Behältern. Die für die zweite Zone verwendete Apparatur besteht bevorzugt aus einem bis fünf Behältern, wobei alle Behälter in Reihe hintereinander geschaltet und durch Rohrleitungen miteinander verbunden sind. Die für die erste Zone verwendete Apparatur kann zweckmäßig auch aus einem Behälter bestehen, der durch Querwände in gleiche oder verschieden große Abteilungen aufgeteilt ist, wobei jede Querwand

mindestens eine Öffnung enthält, deren Querschnitt nur einen Bruchteil, etwa 1/10 bis 1/100 des gesamten Querschnitts des Behälters beträgt.

In der ersten Zone soll die Polymerisationsmischung entweder gar keinen oder maximal bis 3 Gew.-%, vorzugsweise 0 bis 0,5 Gew.-% Umsatz aufweisen. Die Zahlenangaben verstehen sich als Gewichtsprozent gebildetes Polymeres, bezogen auf die Gewichtsmenge des oder der eingesetzten Monomeren. Oberhalb 3 Gew.-% Umsatz wird bereits eine deutliche Wandbelagsbildung festgestellt, die durch übliche Belagsverhinderungsmittel zwar abgeschwächt, aber nicht verhindert werden kann und die mit steigendem Umsatz in der ersten Zone immer stärker zunimmt. Das erzeugte Polymere enthält außerdem eine erhöhte Zahl Stippen (Fischaugen).

Die Polymerisationsmischung wird in der ersten Zone bei Temperaturen gehalten, die zwischen 15°C und einer Temperatur liegen, die 10 °C unter der Polymerisationstemperatur liegt, die in der zweiten Zone angewendet wird. Unter 15°C ist im allgemeinen ein unnötiger Kühlaufwand erforderlich. Bei Temperaturen der Polymerisationsmischung,die um weniger als 10 °C unterhalb der Polymerisationstemperatur liegen, wird ein zu hoher Umsatz der Polymerisationsmischung in der ersten Zone festgestellt. Bei längeren mittleren Verweilzeiten der Polymerisationsmischung in Zone 1 (etwa 20 bis 60 min) empfiehlt es sich, die Mischung auf Temperaturen zu halten, die mehr als 10 °C (etwa 15 bis 20 °C) unterhalb der Polymerisationstemperatur liegen. Zweckmäßig werden die Mischungskomponenten in die erste Zone bei etwa Raumtemperatur eingespeist, durch die eingebrachte Rührenergie erwärmt sich die Mischung in dieser Zone, so daß im allgemeinen die Polymerisationsmischung beim Verlassen der ersten Zone eine höhere Temperatur aufweist als bei der Einspeisung. Dieser Effekt kann durch Kühlung gedämpft oder durch zusätzliche Erwärmung verstärkt werden. An keiner Stelle der Zone 1 sollte jedoch die Temperatur der Reaktionsmischung außerhalb des weiter oben angegebenen Bereiches liegen.

Die mittlere Verweilzeit der Polymerisationsmischung in der ersten Stufe soll 5 bis 60 min, vorzugsweise 10 bis 30 min, und insbesondere 15 bis 20 min betragen. Sie wird ermittelt, wie weiter unten bei den Meßmethoden beschrieben. Unterhalb 5 min mittlerer Verweilzeit wird eine zu breite Kornverteilung des erzeugten Polymeren sowie vermehrte Bildung von Grobkorn und Polymerisatgrieß festgestellt. Die mittlere Verweilzeit ist nach oben im wesentlichen durch wirtschaftliche Erwägungen begrenzt. Oberhalb 60 min tritt keine Verbesserung der erfindungsgemäßen Effekte ein, es muß eine unnötige Verschlechterung der Raum-Zeit-Ausbeute in Kauf genommen werden.

In der ersten Zone soll die Polymerisationsmischung mit einer volumenspezifischen Rührleistung von 0,6 bis 6, vorzugsweise von 1 bis 3 kWm$^{-3}$ bewegt werden. Bei einer volumenspezifischen Rührleistung von weniger als 0,6 kWm$^3$ tritt insbesondere bei kürzeren Verweilzeiten keine ausreichende Mischung der Polymerisationskomponenten ein, es wird eine vermehrte Bildung von Wandbelägen in der zweiten Zone festgestellt, in der dort ablaufenden Polymerisation kommt es zu Unregelmäßigkeiten, die bis zur Ausbildung kompakter Polymerisatblöcke führen können. Bei längerem Betrieb können die Polymerisatablagerungen auf Wandungen und Rührer so stark werden, daß sie aneinander schleifen, wobei größere und kleinere Stückchen abgerissen werden. Der so gebildete "Schleifgrieß" verunreinigt das gebildete Polymerisat und kann zu Behinderungen beim Durchfluß der Polymerisationsmischung durch Zone 2 und beim Austrag der fertig polymerisierten Dispersion aus dieser Zone führen. Werden mehr als 6 kWm$^{-3}$ volumenspezifische Rührleistung in Zone 1 eingebracht, so entsteht ein zu feines Polymerisat, das schlechte Rieselfähigkeit aufweist, außerdem besteht die Gefahr, daß sich die Polymerisationsmischung in der ersten Zone zu stark erwärmt, was entweder einen erhöhten Kühlaufwand erfordert oder es besteht Gefahr, daß ein zu hoher Polymerisationsumsatz erreicht wird, womit dann die weiter oben beschriebenen Schwierigkeiten auftreten.

Die Polymerisationsmischung soll in der ersten Zone 3 bis 20, vorzugsweise 5 bis 10, theoretische Kaskadenstufen durchlaufen. Die theoretische Kaskadenstufenzahl wird nach Patat - Kirchner "Praktikum der technischen Chemie", wie weiter unten bei den Meßmethoden näher beschrieben, an der Apparatur, die für die erste Zone verwendet wird, ermittelt. Während der Ermittlung muß die Meßflüssigkeit mit der gleichen volumenspezifischen Rührleistung bewegt werden, wie später die Polymerisationsmischung. Die Strömungsverhältnisse sind bei der Messung wie beim Gebrauch einzustellen. Bei einer theoretischen Kaskadenstufenzahl unter 3 wird an dem erzeugten Polymeren eine zu breite Kornverteilung, erhöhte Zahl von Stippen (Fischaugen) und Grobkorn festgestellt. Oberhalb einer theoretischen Kaskadenstufenzahl von 20 wird kein günstiger Effekt mehr festgestellt, der die mit wachsender theoretischer Kaskadenstufenzahl steigenden Investitionskosten und sinkenden Raum-Zeit-Ausbeuten rechtfertigen würde.

Besondersgute Ergebnisse werden erhalten, wenn in der ersten Zone die theoretische Kaskadenstufenzahl und die mittlere Verweilzeit der Polymerisationsmischung so eingestellt werden, daß das Produkt aus beiden Größen 30 bis 300 min und insbesondere 50 bis 150 min beträgt.

In der zweiten Zone wird die Polymerisationsmischung bis zu einem Umsatz von 70 bis etwa 98 Gew.-% polymerisiert. Unter 70 Gew.-% Umsatz verbleiben vergleichsweise hohe Mengen Restmonomeres in der Polymerisationsmischung, die mit unnötig hohem Energieaufwand aus der Mischung entfernt, wiedergewonnen und im Kreis geführt werden müssen. Bei Polymerisationsmischungen, die einen hohen Anteil an oberflächenaktiven Stoffen aufweisen, können außerdem bei großen Mengen zu entfernender nichtumgesetzter Monomerer Schwierigkeiten durch Schäumen auftreten, es werden längere Entgasungszeiten benötigt. Oberhalb 98 Gew.-% Umsatz wird eine zunehmende Bildung von Glaskorn und eine starke Zunahme der Stippen(Fischaugen)-Zahl im erzeugten Polymeren festgestellt. Außerdem werden lange Polymerisationszeiten benötigt, um so hohe Umsätze zu erreichen. Vorzugsweise wird in der zweiten Zone bis zum Erreichen eines Umsatzes von 80 bis 95 Gew.-% und insbesondere von 85 bis 90 Gew.-% polymerisiert. Die Prozentangaben beim Umsatz verstehen sich als Gewichtsprozent erzeugten Polymeres, bezogen auf eingesetzte Monomere. Sofern der Polymerisationsmischung Polymere als Pfropfgrundlage zugesetzt werden, ist deren Menge von der Gesamtmenge des erzeugten Polymeren vor Berechnung des Umsatzes abzuziehen.

Die Polymerisationsmischung wird in der zweiten Zone mit einer volumenspezifischen Rührleistung von 0,01 bis 0,6 kWm$^{-3}$, vorzugsweise von 0,02 bis 0,2 kWm$^{-3}$, bewegt. Wird eine geringere volumenspezifische Rührleistung als 0,01 kWm$^{-3}$ angewendet, so werden Entmischungserscheinungen festgestellt, die Produktqualität wird ungleichmäßig und die bei der Polymerisation erzeugte Wärme kann nicht in gewünschtem Maß abgeführt werden, was die Konstanthaltung der Polymerisationstemperatur erschwert. Oberhälb 0,6 kWm$^{-3}$ werden eine ungünstig breite Kornverteilung und erhöhte Grobkornanteile am erzeugten Polymeren festgestellt. Außerdem tritt eine verstärkte Belagsbildung in der zweiten Zone an den Apparateteilen, die mit der Polymerisationsmischung in Kontakt kommen, auf.

In der zweiten Zone wird in einer Apparatur bei einer theoretischen Kaskadenstufenzahl von 10 bis 100 polymerisiert. Die theoretische Kaskadenstufenzahl wird, wie weiter unten näher beschrieben, bestimmt. Wird die theoretische Kaskadenstufenzahl von 10 unterschritten, so zeigt das erzeugte Polymere schlechtere Eigenfarbe, ungünstigere Thermostabilität sowie eine vermehrte Anzahl von Glaskörnern und Stippen (Fischaugen), außerdem ist es schlechter von nicht-umgesetzten Monomeren zu befreien. Theoretische Kaskadenstufenzahlen über 100 erfordern eine unnötig komplizierte Apparatur mit entsprechend erhöhten Investitionskosten, ohne daß dies durch eine entsprechend verbesserte Produktqualität und/oder Ausbeute gerechtfertigt wäre. Vorzugsweise wird in einer Apparatur bei einer theoretischen Kaskadenstufenzahl von 15 bis 50 und insbesondere von 20 bis 40 gearbeitet.

Prinzipiell können während des gesamten erfindungsgemäßen Verfahrens Mittel zur Verhinderung von Belägen an den Wandungen der Apparaturen, die mit der Polymerisationsmischung in Kontakt kommen, angewendet werden. Solche Mittel sind an sich bekannt und bestehen entweder aus einer besonderen Ausbildung der Oberfläche der Apparaturen in bezug auf Oberflächenglätte (beispielsweise mittlere Rauhtiefe unter 10 μm) oder in bezug auf das Oberflächenmaterial, das mit der Polymerisationsmischung in Kontakt kommt (beispielsweise Glas, Emaille, Nickel, eine - Vielzahl von Beschichtungen mit organischen und/oder anorganischen Substanzen) oder in Zusätzen zur Polymerisationsmischung, meist solchen, die in Wasser löslich sind. Bisweilen werden auch beide Maßnahmen (besondere Ausbildung der Oberfläche und Zusätze zur Polymerisationsmischung) gemeinsam angewandt. Aus der Vielzahl der bekannten Methoden zur Belagsverhinderung seien hier nur beispielhaft folgende genannt: DE-OS 19 46 474; DE-OS 26 31 325; DE-OS 27 39 708; DE-OS 27 45 085; DE-OS 27 52 772; DE-OS 28 04 076; DE-OS 28 07 180; DE-OS 28 11 000; BE-PS 845 012 und US-PS 3 926 910. Sofern die angewendeten Mittel in einer besonderen Ausbildung der Oberfläche, mit der die Polymerisationsmischung in der Apparatur in Kontakt kommt, bestehen, werden diese Mittel vorzugsweise erst in der zweiten Zone beim erfindungsgemäßen Verfahren angewandt. Eine Verwendung auch in der ersten Zone ist nicht notwendig, da hier in der Regel ohnehin keine Beläge entstehen. Eine solche Maßnahme würde das Verfahren nur unnötig komplizieren und verteuern.

In der zweiten Zone wird die Polymerisation bei Temperaturen von 40 bis 80 °C vorzugsweise bei 45 bis 75 °C durchgeführt. Der pH-Wert der Polymerisationsmischung sollte zwischen 2 und etwa 10 liegen. Im allgemeinen wird unter dem autogenen Druck des Vinylchlorids bei der gewählten Temperatur polymerisiert, es können jedoch auch Inertgase, beispielsweise Stickstoff im Gasraum über der Polymerisationsmischung vorhanden sein.

Wie bereits oben ausgeführt, können die Apparaturen, die in der ersten Zone bzw. in der zweiten Zone verwendet werden, aus mehreren einzelnen Gefäßen bzw. Reaktoren bestehen. Eines oder mehrere dieser Gefäße können zur Erhöhung der theoretischen Kaskadenstufenzahl durch Querwände, die eine verhältnismäßig enge Öffnung aufweisen, in mehrere Kammern unterteilt sein. Als Rührer werden für die Apparatur, die in der ersten Zone eingesetzt wird, beispielsweise Scheibenrührer verwendet. Das sind Rührer, die auf einer gemeinsamen Achse in gleichen oder verschiedenen Abständen übereinander senkrecht zur Achse verlaufende Scheiben angebracht enthalten, die ihrerseits mehrere, meist 4 bis 8 senkrecht oder schräg zur Scheibenfläche angebrachte Blätter enthalten, die meist über den Umfang der Scheibe hinausragen. Es können auch Schaufelrührer angewendet werden, die auf einer Achse einen Schaufelkranz oder in Abständen übereinander mehrere Schaufelkränze enthalten, die meist aus 2 bis 8 Schaufelblättern bestehen, deren Längskanten senkrecht zur Schaufelachse radial verlaufen und deren Blattflächen entweder in Richtung der Schaufelachse oder in einem bestimmten Winkel zur Schaufelachse, beispielsweise 45 °, angeordnet sind. Letztere Rührerform wird vorzugsweise in verbindung mit den weiter oben beschriebenen Quertrennwänden eingesetzt, wobei in jedem der von den Querwänden abgeteilten Räumen ein Schaufelkranz arbeitet. In der Apparatur, die für die erste Zone verwendet wird, können auch vorteilhaft sogenannte Stromstörer eingesetzt werden, beispielsweise Bleche, deren Längskante in Richtung der Behälterachse verläuft und deren Fläche sich radial von der Gefäßwand ausgehend in Richtung zur Mittelachse des Behälters hin erstreckt.

Die Apparatur, die für die zweite Zone verwendet wird, kann vorteilhaft Blattrührer enthalten, das sind Rührer, die meist aus einem länglichen, weitgehend rechteckigen Blech bestehen, wobei die Rührerachse mit der längeren Mittellinie des Rechtecks zusammenfällt. Stromstörer werden in der Apparatur für die zweite Zone zweckmäßig nicht verwendet.

Nach Verlassen der zweiten Zone wird die Polymerisationsmischung nach bekannten Verfahren, beispielsweise in einem Wärmeaustauscher, abgekühlt, entspannt und von noch vorhandenen nicht-umgesetzten Monomeren weitgehend befreit, das gebildete polymerisat von der Hauptmenge der wäßrigen Flotte getrennt und getrocknet, wobei gegebenenfalls auch während oder nach der Trocknung noch Maßnahmen zur weiteren Entfernung nicht-umgesetzter Monomerer angewendet werden können.

Das erfindungsgemäße Verfahren eignet sich zur kontinuierlichen polymerisation von Vinylchlorid in wäßriger Suspension in Gegenwart von 0 bis 30 Gew.-%, bezogen auf eingesetzte Monomere, mit Vinylchlorid copolymerisierbaren Monomeren, wobei gute Ergebnisse in Gegenwart von 0 bis 15 Gew.-% copolymerisierbarer Monomerer erzielt werden.

Das Verfahren kann auch zur Pfropfcopolymerisation von Vinylchlorid verwendet werden, wobei neben Vinylchlorid noch andere copolymerisierbare Monomere zugegen sein können. Es werden hierbei 0,1 bis 15 Gew.-%, vorzugsweise 1 bis 10 Gew.-%, von polymeren, die mit Vinylchlorid pfropfcopolymerisierbar sind, eingesetzt.

Die erfindungsgemäße Herstellung der Vinylchlorid-Homo-, Co- oder - Pfropfcopolymerisate wird durchgeführt in Gegenwart von 0,001 bis 3 Gew.-%, vorzugsweise 0,01 bis 0,3 Gew.-%, bezogen auf Monomere, radikalbildender Katalysatoren wie zum Beispiel Diaryl-, Diacylperoxide wie Diacetyl-, Acetylbenzoyl-,-Dilauroyl-, Dibenzoyl-, Bis-2,4-dichlorbenzoyl-, Bis-2-methylbenzoylperoxid; Dialkylperoxide wie Di-tert.-butylperoxid, Perester wie tert.-Butylpercarbonat; tert.-Butylperacetat, tert.-Butylperoctoat, tert.-Butylperpivalat; Dialkylperoxy-di-carbonate wie Diisopropyl-, Diethylhexyl-, Dicyclohexyl-, Diethylcyclohexylperoxy-dicarbonate; gemischte Anhydride von organischen Sulfopersäuren und organischen Säuren wie Acetylcyclohexylsulfonylperoxid; als polymerisationskatalysatoren bekannte Azoverbindungen wie Azoisobuttersäurenitril sowie Mischungen verschiedener Katalysatoren.

Ferner wird gegebenenfalls in Gegenwart von 0,01 bis 1 Gew.-%, vorzugsweise 0,05 bis 0,3 Gew.-%, bezogen auf Monomere, von einem oder mehreren der üblichen Suspendiermittel (Schutzkolloide) wie beispielsweise polyvinylalkohol, Cellulosederivate wie wasserlösliche Methylcellulose, Carboxymethylcellulose, Hydroxyethylcellulose, Methylhydroxypropylcellulose sowie Gelatine, ferner Mischpolymerisate von Maleinsäure beziehungsweisederen Halbestern mit Styrolen, Polyvinylpyrrolidon und Copolymerisate aus Vinylacetat und Vinylpyrrolidon polymerisiert.

Bevorzugt wird nach dem erfindungsgemäßen Verfahren in Gegenwart von 0,05 bis 3,0 Gew.-%, bezogen auf eingesetzte Monomere,mindestens eines acetatgruppenhaltigen Polyvinylalkohols polymerisiert, der eine Verseifungszahl von 140 bis 560, insbesondere von 140 bis 480 aufweist und ein gewichtsmittleres Molekulargewicht von 10 000 bis 100 000 besitzt, wobei die Menge dieses polyvinylalkohols oder polyvinylalkohol-Gemisches 100 bis 50 Gew.-%, bezogen auf die Menge aller bei der polymerisation anwesender Mittel ausmacht. Sofern weniger als 100 Gew.-% acetatgruppenhaltige polyvinylalkohole eingesetzt werden, kann die zu 100 Gew.-% fehlende Menge aus einem oder mehreren der weiter oben genannten Suspendiermittel bestehen.

Wenn ein oder mehrere acetatgruppenhaltige Polyvinylalkohole eingesetzt werden, die eine Verseifungszahl über 300 aufweisen, soll deren Menge von der Gesamtmenge aller bei der polymerisation anwesender Suspendiermittel nur maximal 50 Gew.-% betragen. Die restlichen mindestens 50 Gew.-% können enthalten einen oder mehrere acetatgruppenhaltige polyvinylalkohole, die eine Verseifungszahl von unter 300 aufweisen und/oder eines oder mehrere der weiter oben genannten Suspendiermittel.

Durch die in den beiden letzten Absätzen beschriebene bevorzugte Verwendung acetatgruppenhaltiger polyvinylalkohole als Suspendiermittel wird eine erhöhte Porosität der Körner des erzeugten Polymeren erzielt und weniger Belagsbildung bei der Polymerisation beobachtet.

Außer den genannten Suspendiermitteln kann die Polymerisation in Gegenwart-von 0,01 bis 1 Gew.-%, bezogen auf Monomere, von einem oder mehreren Emulgatoren durchgeführt werden, wobei die Emulgatoren in Mischung mit den obengenannten Suspendiermitteln eingesetzt werden. Als Emulgatoren können anionische, amphotere, kationische sowie nicht-ionogene verwendet werden. Als anionische Emulgatoren sind geeignet beispielsweise Alkali-, Erdalkali-, Ammoniumsalze von Fettsäuren wie Laurin-, palmitin-, oder Stearinsäure, von sauren Fettalkoholschwefelsäureestern, von paraffinsulfosäuren, von Alkylarylsulfosäuren wie Dodecylbenzol- oder Dibutylnaphthalinsulfosäure, von Sulfobernsteinsäuredialkylestern sowie die Alkali- und Ammoniumsalze von epoxygruppenhaltigen Fettsäuren wie Epoxystearinsäure, von Umsetzungsprodukten von Persäuren, zum Beispiel Peressigsäure mit ungesättigten Fettsäuren wie Öl- oder Linolsäure oder ungesättigten Oxyfettsäuren wie Ricinolsäure.

Als amphotere beziehungsweise kationenaktive Emulgatoren sind beispielsweise geeignet: Alkylbetaine wie Dodecylbetain sowie Alkylpyridiniumsalze wie Laurylpyridiniumhydrochlorid, ferner Alkylammoniumsalze wie Oxethyldodecylammoniumchlorid. Als nicht-ionogene Emulgatoren sind beispielsweise geeignet: Teilfettsäureester mehrwertiger Alkohole wie Glycerinmonostearat, Sorbitmonolaurat, -oleat; polyoxyethylenester von Fettsäuren oder aromatischen Hydroxyverbindungen; sowie Polypropylenoxid-Polyethylenoxid-Kondensationsprodukte.

Neben Katalysatoren, Suspendiermitteln (Schutzkolloiden) und gegebenenfalls Emulgatoren kann die Polymerisation in Gegenwart von Puffersubstanzen, beispielsweise Alkaliacetaten, Borax, Alkaliphosphaten, Alkalicarbonaten, Ammoniak oder Ammoniumsalzen von Carbonsäuren sowie von Molekülgrößenreglern wie beispielsweise aliphatische Aldehyde mit 2 bis 4 Kohlenstoffatomen, Chlor- oder Bromkohlenwasserstoffe wie zum Beispiel Di- und Trichlorethylen, Chloroform, Bromoform, Methylenchlorid sowie Mercaptanen durchgeführt werden.

Beispiele weiterer geeigneter Polymerisätionshilfsstoffe finden sich in H. Kainer "Polyvinylchlorid und Vinylchlorid-Mischpolymerisate", Auflage 1965, Seiten 13 bis 34.

Zur Copolymerisation mit Vinylchlorid sind beispielsweise eines oder mehrere folgender Monomerer geeignet:

Vinylester von geradkettigen oder verzweigten Carbonsäuren mit 2 bis 20, vorzugsweise 2 bis 4 Kohlenstoffatomen wie Vinylacetat, -propionat, -butyrat, -2-ethylhexoat, Vinylisotridecansäureester; Vinylhalogenide wie'Vinylfluorid, Vinylidenfluorid, Vinylidenchlorid, Vinylether, Vinylpyridin, ungesättigte Säuren wie Malein-, Fumar-, Acryl-, Methacrylsäure und deren Mono- oder Diester mit Mono- oder Dialkoholen mit 1 bis 10 Kohlenstoffatomen; Maleinsäureanhydrid; Maleinsäureimid sowie dessen N-Substitutionsprodukte mit aromatischen cycloaliphatischen sowie gegebenenfalls verzweigten, aliphatischen Substituenten; Acrylnitril, Styrol.

Zur Pfropfcopolymerisation können beispielsweise vernetzte oder unvernetzte elastomere Polymerisate verwendet werden, die durch Polymerisation von einem oder mehreren folgender Monomerer erhalten wurden; Diene wie Butadien, Cyclopentadien; Olefine wie Ethylen, Propylen; Styrol, ungesättigte Säuren wie Acryl- oder Methacrylsäure sowie deren Ester mit Mono- oder Dialkoholen mit 1 bis 10 Kohlenstoffatomen, Acrylnitril, Vinylverbindungen wie Vinylester von geradkettigen oder verzweigten Carbonsäuren mit 2 bis 20, vorzugsweise 2 bis 4 Kohlenstoffatomen, Vinylhalogenide wie Vinylidenchlorid und Vinylchlorid. Letzeres jedoch nur mit mindestens einem der zuvor genannten Monomeren.

Während der Polymerisation können ein oder mehrere folgender Stoffe, gegebenenfalls unter Konstanthaltung des Füllvolumens des Polymerisationsgefäßes, zugegeben werden: Wasser, wäßrige Lösungen, Monomere, Katalysatoren, Cokatalysatoren, weitere Polymerisationshilfsstoffe wie zum Beispiel Regler, Puffersubstanzen, Emulgatoren, Suspendiermittel.

Nach dem erfindungsgemäßen Verfahren erhaltene pulverförmige Polymerisate können wie bisher übliche Suspensionspolymerisate des Vinylchlorids, beispielsweise durch Strangpressen, Spritzgießen oder Kalandrieren, thermoplastisch verarbeitet werden.

Das Verfahren gemäß der vorliegenden Erfindung ermöglicht es, störungsfrei mit sehr guten Raum-Zeit-Ausbeuten Suspensionspolymerisate mit einem überwiegenden Gehalt an polymerisierten Vinylchlorid-Einheiten herzustellen,die sich auch über längere Produktionszeiten durch ein konstantgutes Eigenschaftsbild wie enge Korngrößenverteilung, gute Rieselfähigkeit, geringer Grobkornanteil, geringe Stippenzahl und hohes Schüttgewicht auszeichnen. Das neue Verfahren ist ferner wenig anfällig gegen Bildung von Belägen an den Apparateteilen, die mit der Polymerisationsmischung in Kontakt kommen, wodurch im allgemeinen in üblichen Stahlgefäßen gearbeitet werden kann, die keine besondere Oberflächenbeschichtung aufweisen, welche den Wärmeübergang von der Polymerisationsmischung auf die Behälterwand hemmt.

Nachfolgende Beispiele sollen die Erfindung näher erläutern. Die angegebenen Meßwerte wurden wie folgt ermittelt:

**Rührleistung:**

Die gemessene aufgenommene Leistung des Rührwerkmotors unter Last, vermindert um die aufgenommene Leistung ohne Last wird dividiert durch das Volumen der gerührten Polymerisationsmischung.

**Umsatz:**

In der vorangegangenen Beschreibung ist jeweils der Umsatz beim Verlassen einer Zone angegeben. Dieser wird analytisch bestimmt aus der Menge des gebildeten Polymeren, dividiert durch die Menge der ursprünglich eingesetzten Monomeren. Wenn Polymere als Pfropfgrundlage mitverwendet werden, ist deren Menge von der Menge des insgesamt gebildeten Polymeren abzuziehen.

**Mittlere Verweilzeit:**

Das in der jeweiligen Zone zu einem beliebigen Zeitpunkt während der Durchführung des Verfahrens durchschnittliche vorhandene Volumen der Polymerisationsmischung wird dividiert durch das in der Zeiteinheit in diese Zone eingeführte Volumen der Polymerisationsmischung.

**Theoretische Kaskadenstufenzahl:**

Diese wird an der jeweiligen Apparatur vor Durchführung des erfindungsgemäßen Verfahrens bei laufendem Rührer bestimmt, wobei die in das bewegte Medium eingebrachte volumenspezifische Rührenergie so eingestellt wird, daß sie mit der später beim erfindungsgemäßen Verfahren anzuwendenden übereinstimmt. Im übrigen wird verfahren wie beschrieben bei Patat - Kirchner "Praktikum der technischen Chemie" 3. Auflage (1975), Walter de Gruyter-Verlag, Berlin/New York, Seite 188, mit dem Unterschied, daß eine 0,6 Gew.-% Natriumchlorid enthaltende wäßrige Lösung in der Apparatur vorgelegt und dazu ein konstanter Volumenstrom destillierten Wassers dosiert wird. Zur Ermittlung der Änderung der Leitfähigkeit bzw. der Salzkonzentration in Abhängigkeit von der Zeit wird ein Konduktometer der Firma WTW, Type LF 39 verwendet. Die Ermittlung der theoretischen Kaskadenstufenzahl erfolgt graphisch, das heißt durch Vergleich der experimentell ermittelten Verweilzeit-Verteilungskurve mit den rechnerisch ermittelten Verweilzeit-Verteilungskurven für 1 bis 100 theoretische Kaskadenstufenzahlen (siehe hierzu loc. cit. Seite 186).

**Belagmenge:**

Nach der Beendigung des jeweiligen Versuches werden die entleerten Reaktoren mit Tetrahydrofuran behandelt, bis die Wandbeläge offensichtlich weggelöst sind. Aus den so erhaltenen Tetrahydrofuranlösungen wird das Lösungsmittel abgedampft und der Rückstand gewogen.

**k-Wert:**

Gemessen nach DIN 53 726; Lösungsmittel: Cyclohexanon.

**Schüttgewicht:**

Nach DIN 53 468.

**Korngröße:**

Nach DIN 53 734.

**Stippen (Fischaugen):**

Die Zahl der Stippen wird wie folgt gemessen:

210 g Vinylchloridpolymerisat

    84 g Di-2-ethylhexylphthalat

    3 g Titanoxid (Rutil-Typ) *)

    3 g Barium-Cadmiumlaurat (Irgastab ® BC 12 von Firma CIBA-GEIGY *)

    5,7 g Di-2-ethylhexyl-phthalat *)

    0,3 g Phthalocyanin blau (Heliogenblau ® 6902 K von Firma BASF) *)

    *) als verriebene Paste

werden-innig vermischt. Aus dieser Mischung wird bei 160 °C Walzentemperatur ein Walzfell hergestellt, das nach 10 min in 200 µm Dicke abgenommen und gekühlt wird. Das Fell wird über eine Lampe gespannt. Die unpigmentierten Teilchen in einer Fläche von 100 cm² werden ausgezählt.

**Rieselfähigkeit:**

Nach DIN 43 492; Becherauslauf 12 mm Durchmesser.

**Raum-Zeit-Ausbeute:**

Rechnerisch ermittelt aus der in der angegebenen Gesamtlaufzeit erzeugten Gesamtmenge Polymeres, bezogen auf den zur Polymerisation zur Verfügung stehenden Reaktionsraum. Angegeben in $Mgd^{-1}m^{-3}$.

**Vergleichsversuch A**

Es wird eine Apparatur verwendet, die aus drei hintereinander geschalteten rohrförmigen Reaktoren besteht. Der erste Reaktor hat einen Inhalt von 10 1, ein Verhältnis seiner Länge (Höhe) zu seinem Durchmesser von 10: 1, seine Innenflächen bestehen aus Chromnickelstahl ($V_4A$®-Stahl), er ist mit einem Scheibenrührer ausgestattet, der auf einer gemeinsamen Achse, die mit der Reaktorachse zusammenfällt, in gleichen Abständen 7 Scheiben übereinander trägt, wobei auf jeder Scheibe in gleichen Abständen 6 schaufelähnliche Rührorgane angeordnet sind. Der Rührer besteht ebenfalls aus Chromnickelstahl. Der zweite Reaktor besteht aus Kohlenstoffstahl und ist innen emailliert. Er hat einen Inhalt von 150 I, ein Verhältnis seiner Länge zu seinem Durchmesser von 5: 1 und enthält einen emaillierten Blattrührer, der etwa 70 % des gesamten Reaktorinnenraums durchläuft. Der dritte Reaktor hat einen Inhalt von 300 1, Innenflächen aus Chromnickelstahl ($V_4A$®-Stahl), weist ein Verhältnis seiner Länge zu seinem Durchmesser von 5: 1 auf und enthält einen Blattrührer mit Oberflächen aus Chromnickelstahl, der 85 % des Reaktorinnenraumes durchläuft. Alle drei Reaktoren besitzen Doppelmäntel, die von Wasser als Temperiermedium durchflossen sind. Außerdem enthalten die Reaktoren Einrichtungen zum Messen der Temperatur der Polymerisationsmischung, des Druckes und der Standhöhe der Flüssigkeit.

Zur Durchführung der kontinuierlichen Vinylchloridpolymerisation werden die in der nachfolgenden Tabelle unter A angegebenen Mengen an monomerem Vinylchlorid, Wasser Initiator, Suspendiermittel und Belagsverhinderungsmittel, letztere als Lösungen, mit Hilfe von Druckerhöhungspumpen eingespeist. Der erste Reaktor stellt die in Zone 1 verwendete Apparatur dar, der zweite und dritte Reaktor die in Zone 2 verwendete Apparatur. Die entsprechenden Verfahrensparameter sind ebenfalls in der Tabelle angegeben. Die Reaktorinnentemperaturen werden nach Starten der Polymerisation durch entsprechende Kühlwasserkreisläufe konstant gehalten.

Nach Verlassen des dritten Reaktors wird die Polymerisationsmischung entspannt, von überschüssigem, nichtumgesetztem Monomeren befreit, in einer Zentrifuge die Hauptmenge der wäßrigen Flotte abgeschieden und das feuchte Polymere bei 70 bis 80 °C getrocknet. An dem so gewonnenen Polymeren werden die in der Tabelle angegebenen Meßwerte ermittelt.

Nachdem sich konstante Versuchsbedingungen eingestellt haben, wird der Versuch 48 h fortgeführt, dann werden die Reaktoren entleert und, wie oben näher beschrieben, der gebildete Belag bestimmt. Er ist ebenfalls in der Tabelle angegeben, außerdem enthält die Tabelle zu Vergleichszwecken noch das Produkt aus theoretischer Kaskadenstufenzahl und Verweilzeit in der ersten Zone, wobei unter Berücksichtigung des Umsatzes der Polymerisationsmischung bei Verlassen dieser Zone (7 Gew.-%) geschätzt wurde, wie hoch die theoretische Kaskadenstufenzahl etwa ist, wenn die Polymerisationsmischung in der ersten Zone einen Umsatz von maximal 3 Gew.-% erreicht hat.

**Vergleichsversuch B**

Hierzu wird das Beispiel 1 aus der DE-AS 11 16 410 herangezogen. Dort wird ein ummanteltes Reaktionsgefäß mit einem Durchmesser von etwa 20 cm und einer Höhe von 9,14 m verwendet. Der Inhalt des Reaktionsgefäßes wird durch 15 horizontale Flügelräder mit Radialfluß eines Durchmessers von etwa 10 cm durchgerührt, die an einer durch den Kopf des Reaktionsgefäßes geführten, zentrisch gelagerten Welle angebracht sind. Der Abstand zwischen den ersten 7 Flügelrädern beträgt je 3 Flügelraddurchmesser, darauf folgen 3 Abstände von jeweils dem 4,5 fachen Durchmesser des Flügelrades, und der Abstand zwischen den restlichen Flügelrädern beträgt das 6 fache des Durchmessers. Die Flügeräder besitzen je drei flache Flügel einer Größe von 2,5 x 5 cm.

Innerhalb eines Zeitraumes von 34 h werden kontinuierlich die in der Tabelle angegebenen Mengen Vinylchlorid, Wasser, Initiator und Suspendiermittel dem Reaktionsgefäß zugeführt. Die Flügelräder werden mit einer Umfangsgeschwindigkeit von etwa $1,07 m.s^{-1}$ betrieben. Polymerisationstemperatur, mittlere Verweilzeit,Umsatz der Polymerisationsmischung beim Verlassen des Reaktionsgefäßes und die geschätzte theoretische Kaskadenstufenzahl sind in nachfolgender Tabelle angegeben, zusammen mit den in derDE-AS 11 16 410 verzeichneten, am Polymeren bestimmten Werten. Eine spezifische Viskosität von 0,185, gemessen in einer 0,2 %igen Nitrobenzollösung entspricht einem k-Wert von 67, gemessen in Cyclohexanon. Anhand des Umsatzes der Polymerisationsmischung beim Verlassen des Reaktionsgefäßes und der geschätzten theoretischen Kaskadenstufenzahl dieses Gefäßes wurde die theoretische Kaskadenstufenzahl geschätzt bei der im Gefäß die Reaktionsmischung einen Umsatz von etwa 3 % aufweist und daraus das Produkt theoretische Kaskadenstufenzahl mal Verweilzeit gebildet und zu Vergleichszwecken in der Tabelle aufgeführt.

**Beispiele 1 und 2**

Zur Durchführung des erfindungsgemäßen Verfahrens wird für Zone 1 eine Apparatur verwendet, die aus zwei hintereinander geschalteten rohrförmigen Behältern besteht, von denen jeder einen inneren Durchmesser von 100 mm, eine innere Höhe von 1200 mm und ein Volumen von 9,4 l besitzt. Jeder Behälter enthält zwei Stromstörer in Form eines länglichen Rechtecks mit den Maßen 1200 x 10 mm, die an gegenüberliegenden Stellen der Wandung des Behälters so angebracht sind, daß die lange Kante des Rechtecks in Richtung der Behälterachse verläuft und die kurze Kante des Rechtecks radial in Richtung auf die Behältermitte weist. Jeder Behälter enthält außerdem einen Scheibenrührer, dessen Achse durchgehend mit der Behälterachse zusammenfällt und der auf dieser Achse 5 Scheiben in gleichen Abständen voneinander und vom Kopf und Boden des Behälters entfernt trägt, wobei auf jeder dieser Scheiben in gleichen Abständen voneinander 8 senkrechte Schaufeln mit den Abmessungen 15 x 12 mm angebracht sind. Der Durchmesser jeder Scheibe plus Schaufeln beträgt 65 mm. Beide Behälter, einschließlich der Einbauten und des Rührers bestehen aus Edelstahl (VA-Stahl) und sind über Rohre hintereinander geschaltet und mit der Apparatur der Zone 2 verbunden. Der in Strömungsrichtung der Polymerisationsmischung erste Reaktor enthält am Kopf mehrere Öffnungen zum Zuführen von Flüssigkeit und eine Öffnung zum Zuführen und Abführen von Gasen. Jeder Behälter besitzt einen Doppelmantel, der von Wasser als Temperiermedium durchflossen ist, außerdem Mittel zur Messung der Temperatur, des Druckes und der Standhöhe der Flüssigkeit im Behälter. Zur Durchführung des erfindungsgemäßen Verfahrens in Zone 2 wird eine Apparatur verwendet, die aus drei rohrförmigen Behältern besteht mit einem inneren Durchmesser von 250 mm, einer inneren Höhe von 2560 mm und einem Volumen von 125,6 l. In jedem dieser Behälter ist ein durchgehender Blattrührer angebracht, dessen Achse mit der Behälterachse zusammenfällt und dessen Blatt eine Breite von 190 mm hat. Jeder Behälter und der darin befindliche Blattrührer ist aus Edelstahl (V₄A®-Stahl) gefertigt, besitzt einen Doppelmantel, der von Wasser als Temperiermedium durchflossen ist und Mittel enthält, zur Messung der Temperatur, des Druckes und der Standhöhe der im Inneren befindlichen Flüssigkeit. Die drei Behälter der Zone 2 sind mit den zwei Behältern der Zone 1 über Rohre in Reihe hintereinander geschaltet. Am Ende des in Strömungsrichtung der Polymerisationsmischung letzten Behälters wird die fertig polymerisierte Dispersion ausgetragen.

Vor Beginn der Polymerisation wird sowohl an der Apparatur für Zone 1 wie auch an der für Zone 2 getrennt voneinander die theoretische Kaskadenstufenzahl, wie weiter oben näher beschrieben, bestimmt, wobei die volumenspezifische Rührleistung und die Strömungsverhältnisse so eingestellt werden, wie sie bei der anschließenden Polymerisation sein sollen.

Zur Durchführung der kontinuierlichen Vinylchloridpolymerisation werden die in nachfolgender Tabelle unter Beispiel 1 bzw. 2 angegebenen Mengen an monomerem Vinylchlorid, Wasser, Initiator, Suspendiermittel und belagverhinderndes Mittel, letztere als Lösungen, mit Hilfe von Druckerhöhungspumpen am Kopf der Apparatur für Zone 1 eingespeist. Nach Starten der Polymerisation werden die in der Tabelle angegebenen Behälterinnentemperaturen durch entsprechende Kühlwasserkreisläufe durch die Doppelmäntel der Behälter konstant gehalten. Die beiden Rührer der Apparatur der Zone 1 werden gleichmäßig so betrieben, daß die in der Tabelle aufgeführte volumenspezifische Rührleistung in die Polymerisationsmischung eingebracht wird. Das gleiche gilt für die 3 Rührer der Apparatur von Zone 2. Alle Behälter werden während der Polymerisation nahezu vollständig mit Polymerisationsmischung gefüllt gehalten.

Nachdem sich konstante Reaktionsbedingungen eingestellt haben, wird die Polymerisation noch 48 h weitergeführt, die während dieser Zeit am Ende der Apparatur von Zone 2 ausgetragene Polymerisatdispersion wird abgekühlt und weiterverarbeitet wie unter Vergleichsversuch A beschrieben. Die am fertigen Polymeren gemessenen Werte sind ebenfalls aus der Tabelle ersichtlich. Nach Beendigung der Polymerisation wird die gesamte Apparatur entleert und der darin gebildete Belag, wie weiter oben beschrieben, ermittelt, Werte siehe Tabelle.

**Beispiel 3**

Es wird so gearbeitet wie zuvor unter Beispiel 1 bzw. 2 beschrieben, mit dem Unterschied, daß ein anderes Rezept für die Polymerisationsmischung verwendet wird (siehe Tabelle unter Beispiel 3) und die Polymerisation in Zone 2 in einer anderen Apparatur stattfindet, die besteht aus zwei rohrförmigen Behältern, von denen jeder einen inneren Durchmesser von 250 mm und eine innere Höhe von 3840 mm sowie ein Volumen von 188,5 l aufweist. Jeder Behälter enthält einen durchgehenden Blattrührer mit 190 mm Blattbeite. Behälter und Rührer bestehen aus Edelstahl (V₄A®:Stahl) und sind, wie oben beschrieben, hintereinander geschaltet.

Das in der Polymerisationsmischung verwendete Ethylenvinylacetat-Copolymerisat wird vor Beginn der Polymerisation in monomerem Vinylchlorid gelöst. Die angewendeten Verfahrensparameter und die am fertigen Polymeren bestimmten Werte sind aus der Tabelle unter Beispiel 3 ersichtlich.

**Beispiel 4**

Es wird wiederum verfahren wie zuvor unter Beispiel 1 bzw. 2 beschrieben, jedoch mit dem Unterschied, daß für die Zone 1 eine andere Apparatur verwendet wird, die nur aus einem rohrförmigen Behälter besteht, dessen innerer Durchmesser 10 mm, dessen innere Höhe 2615 mm und dessen Volumen 20,5 l beträgt. Dieser Behälter enthält zwei Stromstörer in Gestalt zweier länglicher Rechtecke mit den Abmessungen 2615 x 10 mm, die ebenso angeordnet sind wie die Stromstörer in der Apparatur für Zone 1 bei den Beispielen 1 und 2. Außerdem enthält der beim vorliegenden Beispiel verwendete Behälter 11 scheibenförmige Einbauten, die senkrecht zur Behälterachse so angeordnet sind, daß sie den gesamten Behälter in 12 etwa gleich große Räume aufteilen. Jede dieser scheibenförmigen Einbauten ist wandbündig im Behälter angeordnet und enthält eine zentrale Öffnung von 14 mm Durchmesser. In der Mittelachse des Behälters konzentrisch zu den zentralen Durchgangsöffnungen der Scheiben verläuft eine Rührerachse von 8 mm Durchmesser durch den gesamten Behälter, die 12 Schrägblatt-Rührorgane so angeordnet trägt, daß jedes Rührorgan etwa in der Mitte einer Abteilung des Behälters arbeitet. Jedes Schrägblatt-Rührorgan besteht aus 8 Blättern, die in gleichen Abständen radial zur Rührerachse so angeordnet sind, daß jede Blattfläche unter 45 ° zur Rührerachse steht. Jedes dieser Blätter hat die Abmessungen 10 x 25 mm, das gesamte Rührorgan einen Durchmesser von 85 mm. Der Behälter einschließlich der Einbauten und des Rührers ist aus Edelstahl (V$_4$A$^\circledR$- Stahl) gefertigt, er enthält einen Doppelmantel, der von Wasser als Temperiermedium durchflossen ist, je eine Einrichtung zur Messung der Temperatur an beiden Enden und in der Mitte des Behälters sowie eine Einrichtung zur Messung des Druckes und der Standhöhe der Flüssigkeit im Behälter. Für die Zone 2 wird dieselbe Apparatur verwendet wie im Beispiel 1 bzw. 2 beschrieben. Der Behälter für Zone 1 ist mit der Apparatur für Zone 2 über ein Rohr in Reihe geschaltet und enthält am anderen Ende mehrere Öffnungen zum Zuführen von Flüssigkeit und eine Öffnung zum Zu- bzw. Abführen von Gas.

Die Messung der theoretischen Kaskadenstufenzahl der verwendeten Apparaturen und der anschließende Betrieb zur Durchführung der kontinuierlichen Polymerisation von Vinylchlorid erfolgt wie in Beispiel 1 bzw. 2 beschrieben. Die angewendeten Betriebsparameter und am fertigen Polymeren ermittelten Werte sind in nachfolgender Tabelle unter Beispiel 4 aufgeführt.

**Beispiel 5**

Es wird verfahren wie vorstehend unter Beispiel 4 beschrieben, jedoch wird ein anderes Polymerisationsrezept verwendet, bei dem als zweites Monomeres Vinylacetat eingesetzt wird. Die verwendeten Apparaturen sind die gleichen wie in Beispiel 4 beschrieben, jedoch enthält die Apparatur für Zone 1 als Rührorgane keine schräg angeordneten Blätter sondern senkrecht zur Rührerachse angeordnete Scheiben von 65 mm Durchmesser, die je 8 senkrecht zur Scheibenfläche angeordnete Schaufeln mit den Abmessungen 15 x 12 mm in gleichen Abständen voneinander enthalten.

Die angewendeten Verfahrensparameter und am fertigen Polymeren ermittelten Werte sind in nachfolgender Tabelle unter Beispiel 5 aufgeführt.

Die in der Tabelle verwendeten Abkürzungen haben folgende Bedeutung:

VAc = Vinylacetat
EVA = Ethylen-Vinylacetat-Copolymer mit 50 Gew.-% Vinylacetat-Einheiten
PDEH = Di-2-ethylhexyl-peroxydicarbonat
BPND = t-Butyl-perneodecanoat
CPND = Cumyl-perneodecanoat
LPO = Laurylperoxid = Di-laurylperoxid
DAPD = Di-acetyl-peroxydicarbonat
MHPC = Methyl-hydroxypropylcellulose, deren 2 gew.-%ige wäßrige Lösung bei 20 °C eine Viskosität von 50 mPa.s aufweist
PVA = Polyvinylalkohol
PVA I = acetatgruppenhaltiger Polyvinylalkohol, Verseifungszahl 270, gewichtsmittleres Molekulargewicht 30000
PVAII = acetatgruppenhaltiger Polyvinylalkohol, Verseifungszahl 270, gewichtsmittleres Molekulargewicht 50 000
PVAIII = acetatgruppenhaltiger Polyvinylalkohol, Verseifungs, zahl 140, gewichtsmittleres Molekulargewicht 100 000
PVA4 = acetatgruppenhaltiger Polyvinylalkohol, Verseifungszahl 460, gewichtsmittleres Molekulargewicht 55 000 SML = -Sorbitanmonolaurat
TCBM = Trichlorbrommethan
WS = Weinsäure
CS = Zitronensäure

**T A B E L L E**

| Bedingungen | Vergleichsversuche | | Beispiele | | | | |
|---|---|---|---|---|---|---|---|
| | A | B | 1 | 2 | 3 | 4 | 5 |
| Vinylchlorid g.h$^{-1}$ | 25 000 | 6 800 | 25 000 | 25 000 | 25 000 | 25 000 | 25 000 |
| Comonomer-Art; g.h$^{-1}$ | -- | -- | -- | -- | -- | -- | VAc; 2 500 |
| Pfropfcopolymer-Art; g.h$^{-1}$ | -- | -- | -- | -- | EVA; 500 | -- | -- |
| Initiator-Art; g.h$^{-1}$ | PDEH; 37,5 | LPO; 34 | PDEH; 37,5 | BPND; 40 | CPND; 10 DAPO; 25 | CPND; 20 LPO; 25 | BPND; 30 LPO; 10 |
| Suspendiermittel I-Art; g.h$^{-1}$ | PVA I; 45 | PVA; 17 | PVA I; 45 | PVA I; 30 | PVA I;20 | PVA II; 25 | PVA II; 30 |
| Suspendiermittel II-Art; g.h$^{-1}$ | -- | -- | -- | MHPC; 4 | PVA IV; 20 | PVA III; 20 | MHPC; 5 |
| Emulgator-Art; g.h$^{-1}$ | -- | -- | -- | -- | -- | SML; 2,5 | -- |
| Puffersubstanz-Art; g.h$^{-1}$ | -- | -- | -- | -- | -- | $NaH_2PO_4$; 15 | $NH_4HCO_3$; 15 |
| Kettenabbrecher-Art; g.h$^{-1}$ | -- | -- | -- | -- | -- | TCBM; 25 | -- |
| Antibelagmittel-Art; g.h$^{-1}$ | WS; 2,4 | 2) | WS; 2,4 | CS; 5,0 | CS; 5,0 | CS; 5,0 | CS 5,0 |
| Wasser g.h$^{-1}$ | 45 000 | 27 200 | 45 000 | 45 000 | 45 000 | 45 000 | 45 000 |

1) geschätzte Werte
2) keine Angabe im Stand der Technik
3) sehr fein; mittlere Korngröße 73 µm

Fortsetzung der T A B E L L E

| | Bedingungen | Vergleichsversuche | | Beispiele | | | | |
|---|---|---|---|---|---|---|---|---|
| | | A | B | 1 | 2 | 3 | 4 | 5 |
| **Zone I** | Endumsatz (Gew.-%) | 7 | nur eine Zone | 0 | 0 | 0,2 | 0,4 | 0,5 |
| | Temperatur (°C) | 50 | | 20 | 20 | 35 | 45 | 45 |
| | Kaskadenstufen | 2,3 | Endumsatz 60 % | 6 | 6 | 6 | 8 | 8 |
| | mittlere Verweilzeit (min) | 8 | | 15,5 | 15,5 | 15,5 | 17 | 17 |
| | volumenspezifische Leistung·kWm$^{-3}$ | 0,3 | Temp. 53 °C | 1,6 | 1,6 | 1,6 | 2,0 | 2,2 |
| | Kaskadenstufen · mittl. Verweilzeit <10 1) (bei 3 % Umsatz) | <10 1) | Kaskadenstufen 1) 15 | 93 | 93 | 93 | 136 | 136 |
| **Zone II** | Endumsatz (Gew.-%)1 | 80 | mittlere Verweilzeit 490 min | 80 | 80 | 85 | 75 | 90 |
| | Temperatur (°C) | 50 | | 55 | 55 | 55 | 66 | 61 |
| | Kaskadenstufen | 30 | | 36 | 36 | 34 | 36 | 36 |
| | mittlere Verweilzeit (min) | 375 | sonst 2) | 320 | 320 | 305 | 325 | 310 |
| | volumenspez. Leistung.kWm$^{-3}$ | 0,05 | | 0,04 | 0,04 | 0,05 | 0,05 | 0,06 |
| | Raum-Zeit-Ausbeute Mgd$^{-1}$m$^{-3}$ | 1,04 | 0,34 | 1,21 | 1,21 | 1,35 | 1,13 | 1,49 |
| | Belag (kg) | 0,15 | 2) | <0,02 | <0,02 | <0,02 | 0,05 | <0,02 |
| **Polymereigenschaften** | K-Wert | 72 | 67 | 70 | 69 | 70 | 57 | 60 |
| | Schüttgewicht (g dm$^{-3}$) | 430 | 500 | 490 | 550 | 500 | 590' | 545 |
| | Korngröße >250 µm (Gew.-%) | 15 | 3) | 1 | 0,5 | 1 | 1 | 0,2 |
| | Korngröße <63 µm (Gew.-%) | 4 | 3) | 5 | 3 | 5 | 8 | 7 |
| | Stippenzahl | 56 | 2) | 3 | 3 | 8 | 10 | 3 |
| | Rieselfähigkeit (s) | 14 | 2) | 10 | 10 | 11 | 8 | 9 |

1) geschätzte Werte    2) keine Angabe im Stand der Technik    3) sehr fein; mittlere Korngröße 73 µm

**Patentansprüche**

1. Kontinuierliches Verfahren zur Herstellung eines Vinylchloridpolymerisates durch Homo-, Co- oder Pfropfpolymerisation von Vinylchlorid, gegebenenfalls in Gegenwart eines oder mehrerer mit Vinylchlorid copolymerisierbarer Monomerer und/oder eines oder mehrerer mit Vinylchlorid pfropfpolymerisierbarer Polymerer, in wäßriger Suspension, in Gegenwart eines oder mehrerer radikalisch zerfallender Aktivatoren, Suspendiermittel, gegebenenfalls anderer oberflächenaktiver Stoffe und weiterer Zusatzstoffe, in mindestens zwei Zonen, in denen die Polymerisationsmischung soweit in Bewegung gehalten wird, daß sich das gebildete Polymere nicht absetzt, wobei in der ersten Zone bis zu einem Umsatz von höchstens 10 Gew.-% unter Rühren mit einer volumenspezifischen Rührleistung von 0,6 bis 6 kWm$^{-3}$ polymerisiert wird, wobei ferner der Umsatz beim Verlassen der letzten Zone 70 bis 98 % beträgt, anschließend abgekühlt, entspannt, von nichtumgesetztem Monomerem befreit und nach Abtrennung der Hauptmenge der wäßrigen Flotte zu einem trockenen Polymerpulver verarbeitet wird, dadurch gekennzeichnet, daß die Polymerisationsmischung in der ersten Zone bis zum Erreichen eines Vinylchlorid-Monomer-Umsatzes von 0 bis 3 Gew.-% in einer Apparatur bei einer theoretischen Kaskaden-Stufenzahl von 3 bis 20, bei mittleren Verweilzeiten der Polymerisationsmischung von 5 bis 60 min und bei einer Temperatur, die zwischen 15 °C und einer Temperatur, die 10 °C unter der Temperatur in der zweiten Zone liegt, sowie in der zweiten Zone in einer Apparatur bei einer theoretischen Kaskaden-Stufenzahl von 10 bis 100 mit einer volumenspezifischen Rührleistung von 0,01 bis 0,2 kWm-3 bewegt und bei Temperaturen von 40 bis 80 °C polymerisiert wird, wobei sich alle Umsatz-Angaben auf eingesetzte(s) Monomere(s) beziehen.

2. Verfahren nach Anspruch 1, dadurch gekennzeichnet, daß die Polymerisationsmischung in der ersten Zone nur bis zum Erreichen eines Umsatzes von 0 bis 0,5 Gew.-% verbleibt.

3. Verfahren nach einem der Ansprüche 1 oder 2, dadurch gekennzeichnet, daß die Polymerisationsmischung in der ersten Zone bei einer theoretischen Kaskaden-Stufenzahl von 5 bis 10 bewegt wird.

4. Verfahren nach einem der Ansprüche von 1 bis 3, dadurch gekennzeichnet, daß die mittlere Verweilzeit der Polymerisationsmischung in der ersten Zone 10 bis 30 min beträgt.

5. Verfahren nach einem der Ansprüche von 1 bis 4, dadurch gekennzeichnet, daß in der ersten Zone die theoretische Kaskaden-Stufenzahl und die mittlere Verweilzeit so eingestellt werden, daß das Produkt aus beiden Größen 30 bis 300, vorzugsweise 50 bis 150 min beträgt.

6. Verfahren nach einem der Ansprüche von 1 bis 5, dadurch gekennzeichnet, daß die Polymerisationsmischung in der ersten Zone mit einer volumenspezifischen Rührleistung von 1 bis 3 kWm-3 bewegt wird.

7. Verfahren nach einem der Ansprüche von 1 bis 6, dadurch gekennzeichnet, daß die Polymerisationsmischung in der zweiten Zone bei einer theoretischen Kaskaden-Stufenzahl von 15 bis 50 bewegt wird.

8. Verfahren nach einem der Ansprüche von 1 bis 7, dadurch gekennzeichnet, daß in der zweiten Zone Mittel zur Verhinderung von Belägen an den Wandungen des Reaktionsraumes angewendet werden.

9. Verfahren nach einem der Ansprüche von 1 bis 8, dadurch gekennzeichnet, daß in Gegenwart von 0,05 bis 3,0 Gew.-%, bezogen auf eingesetzte Monomere, mindestens eines acetatgruppenhaltigen Polyvinylalkohols polymerisiert wird, der eine Verseifungszahl von 140 bis 560 und ein gewichtsmittleres Molekulargewicht von 10 000 bis 100 000 aufweist, wobei die Menge dieses Polyvinylalkohols 100 bis 50 Gew.-%, bezogen auf die Menge aller bei der Polymerisation anwesender Suspendiermittel, ausmacht.

**Claims:**

1. A continuous process for the production of a vinyl chloride polymer by homopolymerisation, copolymerisation, or graft polymerisation of vinyl chloride, if appropriate in the presence of one or more monomers which can be copolymerised with vinyl chloride and/or one or more polymers which can be graft polymerised with vinyl chloride, in aqueous suspension and in the presence of one or more activators which decompose to form free radicals, suspending agents, if appropriate other surface-active substances and further additives, in at least two zones, in which the polymerisation mixture is kept in motion as far as the generated polymer does not form a deposit and is polymerised in the first zone until a vinyl chloride monomer conversion of at most 10 % by weight has been reached with agitation at a volume-specific stirrer power of 0.6 to 6 kWm $^{-3}$, the polymerisation mixture leaves the last zone when 70 to 98 % by weight has been reached, is then cooled, released from pressure, freed from unreacted monomers, removed from the bulk of the aqueous liquor and processed to give a dry polymer, characterised in that the polymerisation mixture is polymerised in the first zone at an average dwell time of 5 to 60 minutes and at a temperature being kept between 15 °C and a temperature 10 °C less than the polymerisation temperature in the second zone until a vinyl chloride monomer conversion of 0 to 3 % by weight has been reached in an apparatus having a number of theoretical cascade stages of 3 to 20 and the polymerisation mixture is polymerised in the second zone at temperatures of 40 to 80 °C with agitation at a volume-specific stirrer power of 0.01 to 0.2 kWm$^{-3}$ in an apparatus having a number of theoretical cascade stages of 10 to 100, all conversion-values are given in % by weight relative to the monomer(s) being employed.

2. The process as claimed in Claim 1, characterised in that the polymerisation mixture remains in the first zone only until a conversion of 0 to 0.5 % by weight has been reached.

3. The process as claimed in either of Claims 1 or 2, characterised in that the polymerisation mixture is agitated in the first zone at a number of theoretical cascade stages of 5 to 10.

4. The process as claimed in any of Claims 1 to 3, characterised in that the average dwell time of the polymerisation mixture in the first zone is 10 to 30 minutes.

5. The process as claimed in any of Claims 1 to 4, characterised in that the number of theoretical cascade stages and the average dwell time in the first zone are so adjusted that the product of these two quantities is 30 to 300, preferably 50 to 150, minutes.

6. The process as claimed in any one of Claims 1 to 5, characterised in that the polymerisation mixture is agitated in the first zone at a volume-specific stirrer power of 1 to 3 kWm$^{-3}$.

7. The process as claimed in any one of Claims 1 to 6, characterised in that the polymerisation mixture is agitated in the second zone at a number of theoretical cascade stages of 15 to 50.

8. The process as claimed in any one of Claims 1 to 7, characterised in that agents for preventing deposits on the walls of the reaction space are used in the second zone.

9. The process according to any one of Claims 1 to 8, characterised in that polymerisation is carried out in the presence of 0.05 to 3.0 % by weight, relative to monomers employed, of at least one polyvinyl alcohol which contains acetate groups and which has a saponification number of 140 to 560 and a weight average molecular weight of 10,000 to 100,000, the quantity of this polyvinyl alcohol amounting to 100 to 50 % by weight, relative to the quantity of all the suspending agents present in the polymerisation.

## Revendications

1. Procédé continu de préparation d'un polymère du chlorure de vinyle par homo-, co- ou polymérisation de greffage du chlorure de vinyle, éventuellement en présence d'un ou plusieurs monomères copolymérisables avec le chlorure de vinyle et/ou d'un ou plusieurs polymères polymérisables par greffage avec le chlorure de vinyle, en suspension aqueuse, en présence d'un ou plusieurs activateurs se décomposant en donnant des radicaux, d'agents de mise et maintien en suspension, éventuellement d'autres substances tensio-actives et d'autres additifs, en au moins deux zones dans lesquelles on maintient en mouvement le mélange destiné à la polymérisation de manière que le polymère formé ne se dépose pas, procédé dans lequel, dans la première zone, on effectue la polymérisation jusqu'à un degré de transformation d'au maximum 10 % en poids sous agitation avec une puissance spécifique en volume d'agitation de 0,6 à 6 kWm$^{-3}$, et le degré de transformation, à la sortie de la dernière zone, est de 70 à 98 %, puis on refroidit le mélange, on le détend, on en élimine les monomères n'ayant pas réagi et, après séparation de la majeure partie du liquide aqueux, on transforme en une poudre de polymère sec, procédé caractérisé en ce qu'on soumet le mélange destiné à la polymérisation à une polymérisation dans la première zone jusqu'à atteindre un degré de réaction du chlorure de vinyle monomère de 0 à 3 % en poids dans un appareillage comportant un nombre théorique d'étages en cascade de 3 à 20, à des temps moyens de séjour du mélange destiné à la polymérisation de 5 à 60 minutes et à une température se situant entre 15°C et une température inférieure de 100°C à celle régnant dans la seconde zone et, dans la seconde zone, on effectue la polymérisation dans un appareillage comportant un nombre théorique d'étages en cascade de 10 à 100 avec une agitation correspondant à une puissance spécifique en volume d'agitation de 0,01 à 0,2 kWm$^{-3}$ et en effectuant la polymérisation à des températures de 40 à 80°C, toutes les données de réaction de transformation se rapportant au(x) monomère(s) introduit(s).

2. Procédé selon la revendication 1, caractérisé en ce que le mélange destiné à la polymérisation ne demeure dans la première zone que jusqu'à atteindre un degré de transformation de 0 à 0,5 % en poids.

3. Procédé selon l'une des revendications 1 ou 2, caractérisé en ce que le mélange destiné à la polymérisation est déplacé dans la première zone comportant un nombre théorique d'étages en cascade de 5 à 10.

4. Procédé selon l'une des revendications 1 à 3, caractérisé en ce que le temps moyen de séjour du mélange destiné à la polymérisation est dans la première zone de 10 à 30 minutes.

5. Procédé selon l'une des revendications 1 à 4, caractérisé en ce que l'on règle dans la première zone le nombre théorique des étages en cascade et le temps moyen de séjour de manière que le produit de ces deux grandeurs vaille 30 à 300, de préférence 50 à 150 minutes.

6. Procédé selon l'une des revendications 1 à 5, caractérisé en ce que le mélange destiné à la polymérisation est déplacé dans la première zone avec une puissance spécifique en volume d'agitation de 1 à 3 kWm$^{-3}$.

7. Procédé selon l'une des revendications 1 à 6, caractérisé en ce que le mélange destiné à la polymérisation est déplacé dans la seconde zone comportant un nombre théorique d'étages en cascade de 15 à 50.

8. Procédé selon l'une des revendications 1 à 7, caractérisé en ce qu'on applique dans la seconde zone des moyens destinés à empecher la formation de dépôts sur les parois de l'espace de réaction.

9. Procédé selon l'unc des revendications 1 à 8, caractérisé en ce qu'on effectue la polymérisation en présence de 0,05 à 3,0 % en poids, par rapport aux monomères utilisés, d'au moins un poly(alcool vinylique) contenant des groupes acétates, qui présente(nt) un indice de saponification de 140 à 560 et un poids moléculaire moyen en poids de 10 000 à 100 000, la quantité de ce poly(alcool vinylique) représentant 100 à 50 % en poids, par rapport à ia quantité de la totalité de l'agent de mise et maintien en suspension present lors de la polymérisation.